# EUROPÄISCHE PATENTSCHRIFT

(11) **EP 1 364 823 B1**
(45) Veröffentlichungstag und Bekanntmachung des Hinweises auf die Patenterteilung: **11.04.2007**
(21) Anmeldenummer: 03010166.1
(22) Anmeldetag: 06.05.2003
(51) Int. Cl.: B60J 7/20

(54) **Cabriolet-Fahrzeug mit einem unterhalb eines Deckelteils ablegbaren Dach**
Convertible vehicle with tiltable roof storable under a panel element
Véhicule convertible avec toit escamotable au dessous d'un panneau

(30) Priorität: 23.05.2002 DE 20208001 U
(43) Veröffentlichungstag der Anmeldung: 26.11.2003
(73) Patentinhaber: Wilhelm Karmann GmbH, 49084 Osnabrück (DE)
(72) Erfinder: Russke, Klaus, 49143 Bissendorf (DE)

(56) Entgegenhaltungen:
- DE-A- 10 039 682
- DE-A- 10 039 683
- DE-A- 10 063 152
- US-A- 6 145 915
- US-B1- 6 250 707

## Beschreibung

Die Erfindung betrifft ein Cabriolet-Fahrzeug mit einem unterhalb eines Deckelteils ablegbaren Dach nach dem Oberbegriff des Anspruchs 1.

Aus der DE 197 56 981 C2 ist ein Cabriolet-Fahrzeug bekannt, bei dem eine Verdeckkastenabdeckung insgesamt einerseits zur Freigabe einer Durchtrittsöffnung für das sich öffnende oder sich schließende Dach in einem mit der Fahrtrichtung einen spitzen Winkel einschließenden Öffnungssinn und andererseits zur Freigabe einer Beladeöffnung für einen Kofferraum in einem mit der Fahrtrichtung einen stumpfen Winkel bildenden Öffnungssinn beweglich ist.

Sowohl zur Freigabe der Kofferraumöffnung als auch zur Freigabe der Durchtrittsöffnung für das Dach muß die gesamte Verdeckkastenabdeckung bewegt werden. Dadurch sind die Antriebsorgane relativ groß auszulegen. Eine beispielsweise hydraulische Antriebsanlage benötigt einen hohen Raumbedarf für die Antriebe und den entsprechenden Hydraulikölvorrat. Zudem stellt sich das Problem, daß beim Aufschwenken der Verdeckkastenabdeckung zur Freigabe der Durchtrittsöffnung für das Dach das vordere Ende relativ hoch aufgeschwenkt wird, was in niedrigen Garagen hinsichtlich der Anschlaghöhe problematisch sein kann, etwa wann Lüftungsrohre oder andere Installationen die lichte Höhe einschränken.

Insbesondere bei solchen Cabriolet-Fahrzeugen, bei denen ein hinteres Dachteil, beispielsweise ein rückwärtiger Spannbügel eines teilweise oder vollständig flexiblen Faltverdecks, auf dem Verdeckkasten in geschlossener Stellung des Daches aufliegt, muß das hintere Dachteil zunächst sehr weit angehoben werden. Erst danach ist ein Aufschwenken der Verdeckkastenabdeckung in der beschriebenen Weise, bei dem die vordere Kante der Verdeckkastenabdeckung in einem großen Schwenkradius aufwärts geführt wird, ermöglicht. Die Öffnung des Verdeckkastendeckels kann erst nach Abschluß der Abhebebewegung des rückwärtigen Dachteils durchgeführt werden, wodurch die Verdecköffnungs- und Schließbewegung einen relativ langen Zeitraum beansprucht. Zudem müssen langhubige Antriebsorgane auch für das hintere Dachteil vorgesehen sein.

Aus der DE 100 39 682 A ist ein Cabriolet-Fahrzeug der eingangs genannten Art bekannt, bei dem mit einem hinreichenden Abstand zu einem hinteren Dachteile eine Trennfuge vorgesehen ist mit einer Schwenkachse, um die ein hinteres Verdeckkastenteil relativ zu einem vorderen Verdeckkastenteil zur Freigabe der Öffnung für Gepäck verschwenkt werden kann. Zur Freigabe der Durchtrittsöffnung für das Dach ist die gesamte Verdeckkastenabdeckung wiederum zu verschwenken. Dies ist insbesondere dann nachteilig, wenn ein rückwärtiger Spannbügel eines teilweise oder vollständig flexiblen Faltverdecks auf dem Verdeckkastendeckel in geschlossener Stellung des Daches aufliegt, da dieser dann wiederum sehr weit zunächst angehoben werden muß.

Aus der US-A-6,145,915 ist ein Cabriolet-Fahrzeug bekannt, bei dem die Verdeckkastenabdeckung zusätzlich ein schwenkbares Klappenelement trägt, das im geschlossenen Zustand des Daches den Raum karosserieinnenseitig zwischen einem hinteren Dachteil und den hinteren Sitzen abdecken kann. Dieses Deckelteil schließt einen Ausschnitt in der Verdeckkastenabdeckung und kann unter die Verdeckkastenabdeckung verschwenkt werden. Ist auch hierbei das Cabriolet-Fahrzeug mit einem rückwärtigen Spannbügel ausgerüstet, der auf der Verdeckkastenabdeckung aufliegt, haftet diesem Cabriolet-Fahrzeug ein gleicher Nachteil an, wie er in den zuvor beschriebenen Schriften zum Stand der Technik angesprochen wurde. Insgesamt ist hier die Verdeckkastenabdeckung dieses Deckelteil für eine Aufschwenkbewegung der Verdeckkastenabdeckung zur Freigabe der Öffnungsbewegung für das Gepäck nicht zu verkleinern.

Der Erfindung liegt das Problem zugrunde, ein Cabriolet-Fahrzeug der eingangs genannten Art derart weiterzubilden, daß die genannten Nachteile vermindert werden.

Die Erfindung löst dieses Problem durch ein Cabriolet-Fahrzeug mit den Merkmalen des Anspruchs 1. Hinsichtlich vorteilhafter Ausgestaltungen wird auf die Ansprüche 2 bis 7 verwiesen.

Mit dem Cabriolet-Fahrzeug nach Anspruch 1 muß zur Freigabe der Durchtrittsöffnung für das Dach nicht die Verdeckkastenabdeckung als ganzes vollständig aufgeschwenkt werden, sondern die einzelnen Teile der Abdeckung bewegen sich aufeinander zu bzw. ein Teil schwenk gegen ein anderes Teil, wodurch der Energieaufwand vermindert ist und die Antriebsorgane entsprechend kleiner dimensioniert sein können. Durch das zusätzliche, die Schwenkbewegung der Teile zumindest unterstützende Organ ist der Kraftaufwand zum Bewegen der Verdeckkastenabdeckung minimiert. Die Toleranzen bei den mechanischen Teilen der Verdeckkastenabdeckung können relativ großzügig bemessen sein, da es aufgrund des zusätzlichen Antriebsorgans nicht zu einem Verkanten der Teile kommen kann, sondern diese schwenken bei der Öffnung des Deckelteils unabhängig von ihrer Führung an der Karosserie gegeneinander ein.

Insbesondere wenn ein zusätzlicher Hilfsrahmen angeordnet ist, der sich unterhalb eines hinteren Teils der Verdeckkastenabdeckung erstreckt, kann ein Standardschloß verwendet werden, das das hintere Ende der Verdeckkastenabdeckung mit der Karosserie verbindet und bei geschlossener Verdeckkastenabdeckung verriegelt. Das Aufschwenken über den Hilfsrahmen vermindert die Kräfte, die auf das Schloß einwirken. Insofern ist die Verwendung relativ einfacher und billiger Bauteile möglich.

Wenn weiterhin besonders vorteilhaft das Antriebs- oder antriebsunterstützende Organ als Zugfeder ausgebildet ist, kann sowohl das Schwenken der Teile der Dachabdeckung als auch das Öffnen des hinteren Teils der Dachabdeckung zur Freigabe der Beladeöffnung für Gepäck unterstützt werden. Es ist dadurch vermieden, daß zwar eine Unterstützung für das Öffnen des Deckelteils zur Freigabe der Durchtrittsöffnung für das Dach, jedoch eine Behinderung für das Öffnen des Deckelteils zur Freigabe der Beladeöffnung für Gepäck durch das zusätzliche Organ stattfindet.

Weitere Vorteile und Merkmale ergeben sich aus in der Zeichnung dargestellten und nachfolgend beschriebenen Ausführungsbeispielen des Gegenstandes der Erfindung. In der Zeichnung zeigt:
- Fig. 1: eine schematische seitliche Heckansicht eines Cabriolet-Fahrzeugs bei geschlossener Verdeckkastenabdeckung,
- Fig. 2: eine ähnliche Ansicht wie Fig. 1 bei Freigabe der Durchtrittsöffnung für das Dach,
- Fig. 3: eine ähnliche Ansicht wie Fig. 2 bei Freigabe der Beladeöffnung für den Kofferraum,
- Fig. 4: eine ähnliche Ansicht wie Fig. 1 einer alternativen Ausführungsform mit einer Zugfeder,
- Fig. 5: eine ähnliche Ansicht wie Fig. 2 der alternativen Ausführungsform,
- Fig. 6: eine ähnliche Ansicht wie Fig. 3 der alternativen Ausführungsform.

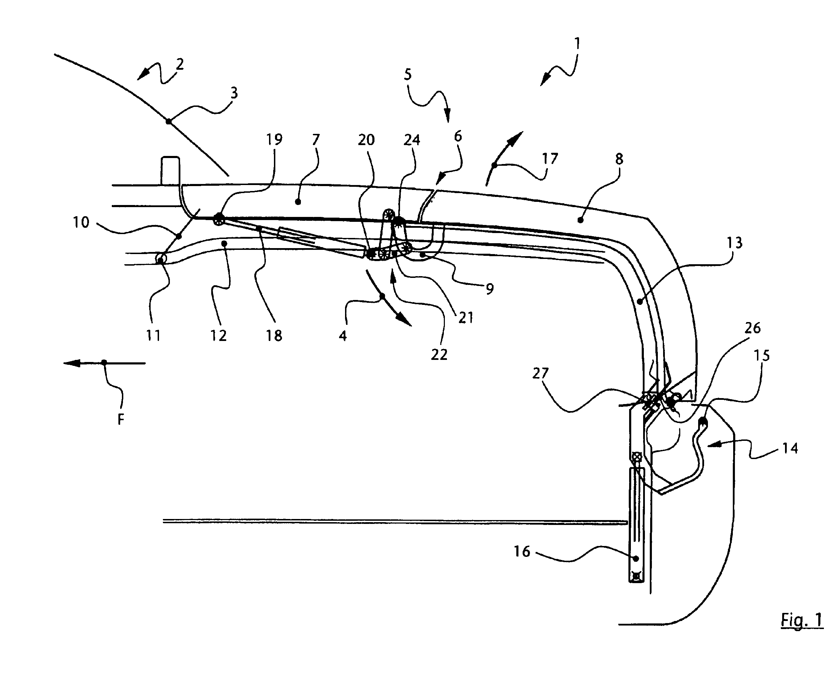

In den Fig. 1 bis 3 ist ein Heckbereich eines Cabriolet-Fahrzeugs 1 dargestellt. Dieses weist ein Dach 2 auf, das im Ausführungsbeispiel ein starres hinteres Dachteil 3 umfaßt und Träger einer Heckscheibe ist. Das Dach 2 kann insgesamt aus starren Dachteilen gebildet sein. Auch ist es möglich, daß das Dach 2 teilweise oder im wesentlichen vollständig flexibel ist. In jedem Fall verbleibt jedoch ein starrer hinterer Dachabschluß, beispielsweise auch ein Spannbügel, über den das Dach 2 auf der Karosserie aufsteht.

Das Dach 2 ist insgesamt unterhalb einer Verdeckkastenabdeckung 5 ablegbar. Diese ist durch ein mehrteiliges Deckelteil gebildet und umfaßt im Ausführungsbeispiel zwei an einer Querfuge 6 voneinander separierte Teile 7,8. Im geschlossenen Zustand ist das Teil 7 dem hinteren Teil 8 in Fahrtrichtung F vorgeordnet. Das Teil 7 liegt dabei horizontal, das Teil 8 umfaßt einen horizontal liegenden und einen sich heckwärts anschließenden Vertikalteil. Beide Teile 7,8 der Verdeckkastenabdeckung 5 sind über ein Vorgelegegetriebe 22 mit einem Getriebeteil 9 miteinander derart verbunden, daß sie in Richtung des Pfeils 4 gegeneinander verschwenken können. Die Teile 7,8 decken insgesamt einen Verdeckkasten sowie einen Kofferraum ab.

Das vordere Teil 7 ist über den Fahrzeugseiten zugeordnete Ausleger 10, an deren freien Enden sich Achsstummel, Gleitstücke oder dergleichen Lagerungselemente 11 befinden, in seitlichen Führungsbahnen 12, die sich im wesentlichen in Fahrzeuglängsrichtung erstrecken, abgestützt. Die Führungsbahnen 12 können beispielsweise durch metallische Profile, die etwa C-förmig ausgebildet sein können, gebildet sein. Die Achsstummel, Gleitstücke oder andere Führungselemente 11, die in den Führungsbahnen 12 längsverschieblich geführt sind, sind jeweils derart mit dem Ausleger 10 gelenkig verbunden, daß ein Verschwenken des Auslegers 10 in Fahrzeugquerrichtung ermöglicht ist. Hierzu können beispielsweise Kugelgelenke vorgesehen sein. Damit ist es möglich, daß die den Fahrzeuglängsseiten zugeordneten Führungsschienen 12 sich nicht parallel zueinander erstrecken, sondern entgegen der Fahrtrichtung F aufeinander zulaufen, wodurch ein Verjüngen des Fahrzeughecks möglich ist.

Unterhalb des heckseitigen Teils 8 der Verdeckkastenabdeckung 5 befindet sich ein Hilfsrahmen 13, der das Teil 8 trägt und in seinem unteren Bereich an einem um eine Fahrzeugquerachse 15 schwenkbaren Scharnier 14 gehalten ist, wobei die Drehachse 15 des Scharniers 14 weit heckwärts verlagert ist und somit eine günstige Schwenkkinematik sicherstellt. Der Hilfsrahmen 13 für die Verdeckablagebewegung tritt durch den Karosseriebereich nach außen und liegt in dem veranschaulichten Ausführungsbeispiel innerhalb der Beladeöffnung. Durch eine geeignete Gestaltung des Hilfsrahmens ist es allerdings auch zu realisieren, daß er außerhalb der Beladeöffnung liegt. Eventuelle Querträger können ober- oder unterhalb der Beladeöffnung für den Kofferraum vorgesehen sein.

Um die Schwenkbewegung um die Achse 15 bewirken zu können, ist zumindest ein Antriebsorgan 16 vorgesehen, das im Ausführungsbeispiel als Hydraulikzylinder ausgebildet ist. Zum Sicherstellen einer hinreichend verwindungsfreien Bewegung sind vorteilhaft zwei Antriebsorgane 16 vorgesehen, die den jeweiligen Fahrzeugseiten zugeordnet sind. Auch ein zentrales Antriebsorgan 16, das über ein Synchronisationsgestänge oder dergleichen auf beide Fahrzeugseiten wirkt, ist möglich.

Das oder die Antriebsorgan(e) wirkt oder wirken unmittelbar nur auf das hintere Teil 8 der Verdeckkastenabdeckung 5. Durch Ausschub des eingezeichneten Zylinders 16 wird das rückwärtige Dachteil 8 in Richtung des Pfeils 17 um die Achse 15 aufgeschwenkt.

Das vordere Dachteil 7 kann in der oben beschriebenen Weise über den Ausleger 10 und das Lagerungselement 11 in seitlichen Führungsschienen 12 geführt sein. Dies ist jedoch nicht zwingend. Vielmehr kann ein zusätzliches Antriebs- oder antriebsunterstützendes Organ 18 vorgesehen sein, das nach dem ersten Ausführungsbeispiel (Fig. 1 bis Fig. 3) als Gasfeder ausgebildet ist. Diese ist mit einem Ende 19 an dem vorderen Teil 7 der Verdeckkastenabdeckung 5 angelenkt. Mit dem gegenüberliegenden Ende 20 greift das antriebsunterstützende Organ 18 an einem ersten Hebel 21 eines Vorgelegegetriebes 22 an. Über dieses Vorgelegegetriebe 22, das durch das Antriebs- oder antriebsunterstützende Organ 18 kraftbeaufschlagt wird, kann das vordere Teil 7 in Richtung des Pfeils 4 über das Scharnier 9 gegen das hintere Teil 8 einschwenken. Somit ist ein aktives Verschwenken der Teile 7,8 gegeneinander bewirkt. Es kann nicht zu einem Verkanten beispielsweise des Lagerungsteils 11 in der Führungsschiene 12 kommen. Die Gesamtöffnungsbewegung der Verdeckkastenabdeckung 5 läuft somit ruckfrei ab. Zudem kann das hintere Antriebsorgan 16 klein ausgeführt werden, da es nicht gegen verkantende Teile anarbeiten muß. Dadurch ist Bauraum gespart, der als Kofferraum zur Verfügung steht. Auch die Krafteinleitung in das Scharnier 14, das um die heckseitige Achse 15 schwenkt, ist minimiert. Das Antriebsorgan 16 ist nicht mehr für die gesamte Verdeckkastendeckelöffnung zuständig, sondern lediglich für das hintere Teil 8. Es ist somit von der Bewegung des vorderen Teils 7 entlastet, dessen Relativbewegung gegenüber dem Teil 8 durch das zusätzliche Antriebs- oder antriebsunterstützende Organ 18 erreicht ist. Während des Einschwenkens des Teils 7 gegen das hintere Teil 8 wird die Kraft durch die Hebelübersetzung des Vorgelegegetriebes 22 kontinuierlich reduziert.

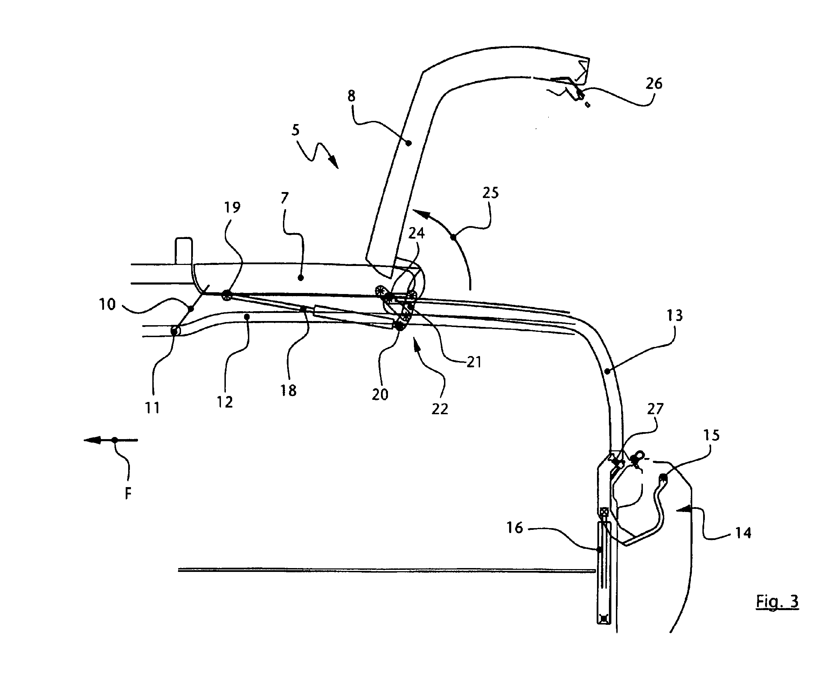

Zur Bewirkung der Freigabe der Beladeöffnung für den Kofferraum (Fig. 3) bleibt das vordere Teil 7 in horizontal liegender Ruhestellung. Nur das hintere Teil 8 wird um die Achse 24, an der das Teil 8, der Hilfsrahmen 13 und das vordere Teil 7 miteinander verbunden sind, in Richtung des Pfeils 25 aufwärts geschwenkt.

Hierbei löst sich das heckdeckelseitige Schloß 26 vom Schloßzapfen 27, der an dem Hilfsrahmen 13 angebracht ist. Durch diese Anordnung am Hilfsrahmen 13, und somit Zuordnung des Schloßzapfens 27 zu den beweglichen Teilen, ist die Toleranz der beweglichen Teile gegen die feststehenden Teile der gezeigten Ausbildung weiterhin verbessert.

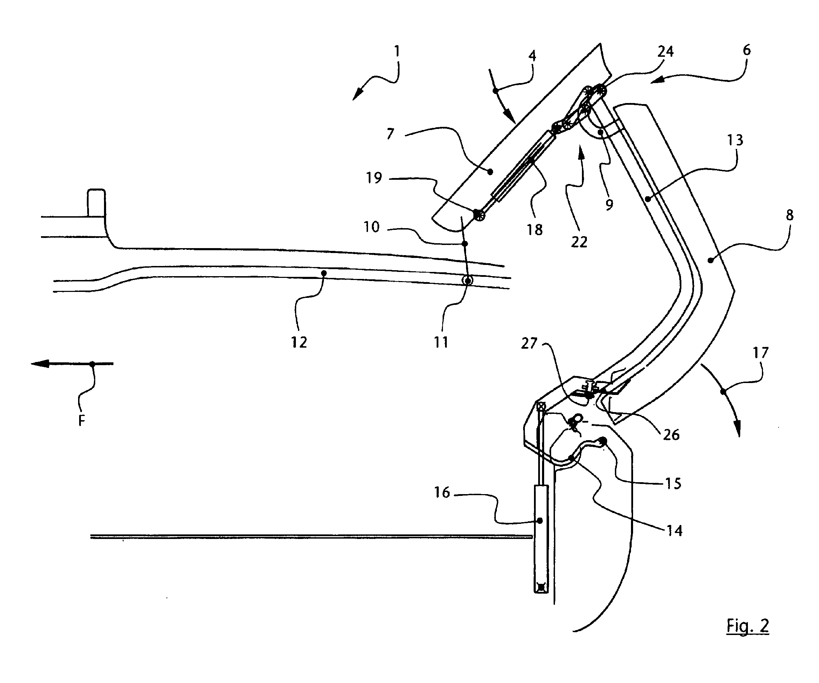

Da die Gasdruckfeder 18, die in den Figuren 1 bis 3 gezeigt ist, eine kolbeneinfahrende Kraft ausübt, um somit die Einschwenkbewegung gemäß Fig. 2 zu unterstützen, wird in der Öffnungsbewegung des hinteren Teils 8 zur Freigabe der Beladeöffnung für den Kofferraum gegen die Gasdruckfeder 18 angearbeitet, wodurch ein erhöhter Kraftaufwand erforderlich ist.

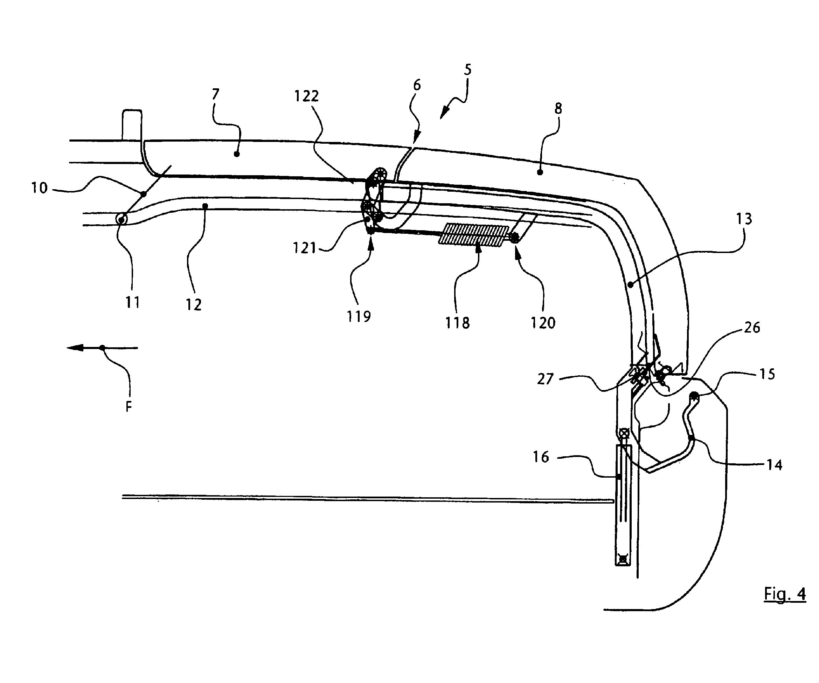

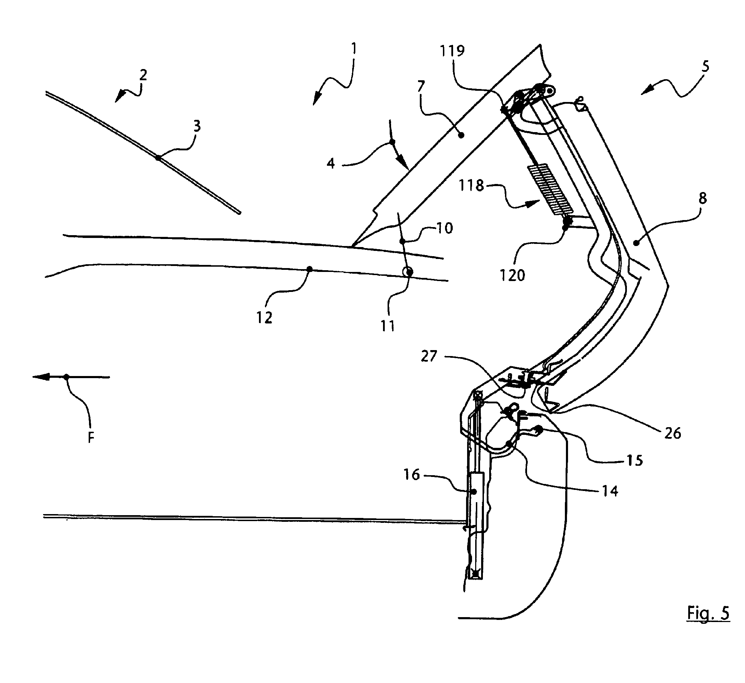

Um eine diesbezügliche Optimierung zu erreichen, ist das zweite Ausführungsbeispiel gemäß den Figuren 4 bis 6 vorgesehen. Hier ist das Antriebs- oder antriebsunterstützende Organ 118 als Zugfeder ausgebildet und mit seinem hinteren Ende 120 an dem Hilfsrahmen 13 angelenkt. Das vordere Ende 119 greift hingegen an einem Hebel 121 des Vorgelegegetriebes 122 an.

Zur Freigabe der Durchtrittsöffnung für das Dach wird auch hier das Antriebsorgan 16 ausgefahren, so daß das hintere Teil 8 der Verdeckkastenabdeckung 5 im gleichen Sinn wie in Fig. 2 verschwenkt. Ebenso schwenkt das vordere Dachteil 7 in Richtung des Pfeils 4 gegenüber dem hinteren Dachteil 8 ein. Das Einschwenken wird hierbei durch die Zugkraft des Zugorgans 118 zumindest unterstützt.

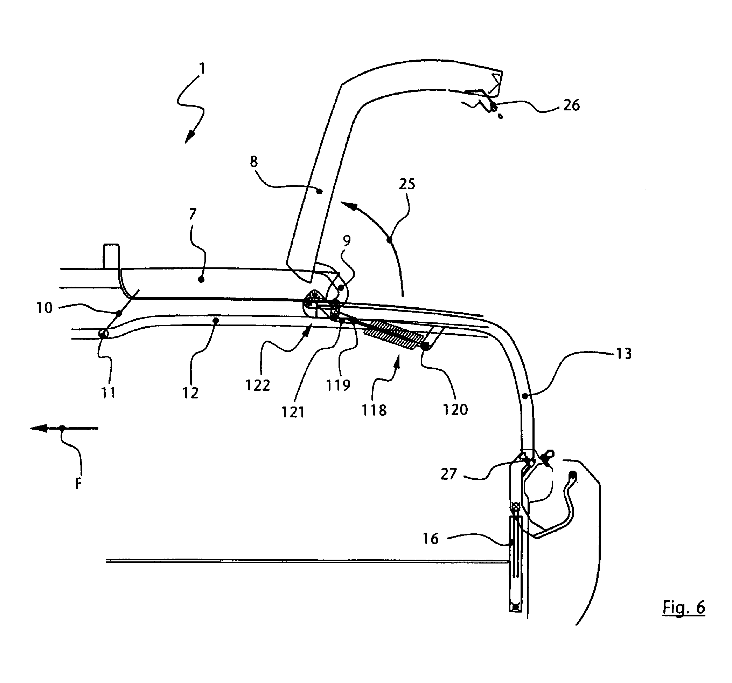

Auch beim Aufschwenken des hinteren Teils 8 zur Freigabe der Beladeöffnung für den Kofferraum (Fig. 6) übt die Zugfeder 118 eine unterstützende Kraft aus, indem sie an dem Hebel 121 des Vorgelegegetriebes 122 derart angreift, daß dieser auf das Scharnier 9 im Öffnungssinn für das hintere Teil 8 der Verdeckkastenabdeckung 5 einwirkt. Insofern sind beide Öffnungsbewegungen der Verdeckkastenabdeckung 5 durch das Zugglied 118 in diesem Ausführungsbeispiel unterstützt. Dadurch, daß bei der Freigabe der Beladeöffnung für Gepäck der Hilfsrahmen 13 in Ruhelage bleibt, bildet dieser ein stabilisierendes Element aus, er kann als starrer Träger für die Anlenkung 120 des rückwärtigen Endes der Zugfeder 118 dienen.

Neben den gezeigten Ausführungsbeispielen sind weitere Antriebs- oder antriebsunterstützende Elemente zum Einschwenken der Teile 7,8 gegeneinander möglich. Deren Anlenkpunkte können variieren, wie gezeigt. Auch ist es beispielsweise möglich, daß das Organ direkt zwischen den Teilen 7,8 angeordnet ist.

## Patentansprüche

1. Cabriolet-Fahrzeug (1) mit einem im rückwärtigen Fahrzeugbereich unterhalb einer Verdeckkastenabdeckung (5) ablegbaren Dach (2), wobei die Verdeckkastenabdeckung (5) einerseits zur Freigabe einer Durchtrittsöffnung für das Dach und andererseits zur Freigabe einer Beladeöffnung für einen Kofferraum beweglich ist und die Verdeckkastenabdeckung (5) mehrteilig (7;8) ausgebildet ist und zumindest eine im wesentlichen quer zur Fahrtrichtung verlaufende Trennungsfuge zwischen den Teilen (7;8) umfaßt und wobei zur Freigabe der Beladeöffnung für Gepäck zumindest ein in Fahrtrichtung vorgeordneter Teil (7) der Verdeckkastenabdeckung in Ruhestellung verbleibt, **dadurch gekennzeichnet, daß** zur Freigabe der Durchtrittsöffnung für das Dach die mehreren Teile (7;8) der Verdeckkastenabdeckung um eine mit einem Abstand zu einem hinteren Dachteil (3) gelegene Achse (24) gegeneinander schwenkend ausgebildet sind und daß für das Schwenken der Teile (7;8) gegeneinander wirksames Antriebs- oder antriebsunterstützendes Organ (18; 118) vorgesehen ist.

2. Cabriolet-Fahrzeug (1) nach Anspruch 1, **dadurch gekennzeichnet, daß** das Antriebs- oder antriebsunterstützende Organ (118) im Sinne eines Aufschwenkens des rückwärtigen Teils (8) bei Freigabe der Beladeöffnung für Gepäck im Sinne eines Aufschwenkens eines rückwärtigen Teils (8) gegenüber dem vorgeordneten Teil (7) wirksam ist.

3. Cabriolet-Fahrzeug nach Anspruch 1 oder 2, **dadurch gekennzeichnet, daß** zur Freigabe der Durchtrittsöffnung für das Dach das Teil (7) einschwenkend gegen das andere Teil (8) beweglich ist.

4. Cabriolet-Fahrzeug nach einem der Ansprüche 1 bis 3, **dadurch gekennzeichnet, daß** als Antriebs- oder antriebsunterstützendes Organ (118) zumindest eine Zugfeder vorgesehen ist.

5. Cabriolet-Fahrzeug nach einem der Ansprüche 1 bis 4, **dadurch gekennzeichnet, daß** unterhalb der Erstreckungsebene eines in Fahrtrichtung hinteren Teils (8) der Verdeckkastenabdeckung (5) ein Hilfsrahmen (13) angeordnet ist, der als Widerlager für das Antriebs- oder antriebsunterstützende Organ (118) dient, das sich von diesem aus in Richtung eines mit dem vorgeordneten Teil verbundenen Hebels erstreckt.

6. Cabriolet-Fahrzeug nach einem der Ansprüche 1 bis 5, **dadurch gekennzeichnet, daß** die Verdeckkastenabdeckung zweiteilig ausgebildet ist und die Teile über ein Vorgelegegetriebe (22, 122) miteinander verbunden sind.

7. Cabriolet-Fahrzeug nach Anspruch 5 oder 6, **dadurch gekennzeichnet, daß** für das Aufschwenken des hinteren Teils (8) der Verdeckkastenabdeckung (5) zur Freigabe der Beladeöffnung für Gepäck sowie für die Anlenkung des Hilfsrahmens (13) und für das Aufschwenken des vorderen Teils (7) gegenüber dem hinteren Teil (8) eine gemeinsame Achse (24) vorgesehen ist.

## Claims

1. Convertible vehicle (1) having a roof (2) able to be stowed in the rear part of the vehicle below a cover (5) of a folding-top compartment, the cover (5) of the folding-top compartment being movable on the one hand to open an opening for the roof to pass through and on the other hand to open a loading opening for a boot, and the cover (5) of the folding-top compartment being in multi-part (7, 8) form and comprising at least one dividing joint between the parts (7, 8) which extends substantially transversely to the direction of travel, and at least a part (7) of the cover of the folding-top compartment, which part (7) is positioned at the front in the direction of travel, remaining in a rest position to allow the loading opening for luggage to be opened, **characterised in that**, to allow the opening for the roof to pass through to be opened, the plurality of parts (7, 8) of the cover of the folding-top compartment are designed to pivot relative to one another about an axis (24) positioned at a distance from a rear part (3) of the roof, and **in that** a driving or drive-assisting member (18, 118) is provided which acts to pivot the parts (7, 8) relative to one another.

2. Convertible vehicle (1) according to claim 1, **characterised in that** the drive or drive-assisting member (118) acts to cause pivoting-up of the rear part (8) when the loading opening for luggage is being opened to cause a rear part (8) to pivot up relative to the part (7) positioned at the front.

3. Convertible vehicle (1) according to claim 1 or 2, **characterised in that**, to allow the opening for the roof to pass through to be opened, the part (7) is movable by pivoting-in towards the other part (8).

4. Convertible vehicle (1) according to one of claims 1 to 3, **characterised in that** at least one traction spring is provided as the driving or drive-assisting member (118).

5. Convertible vehicle (1) according to one of claims 1 to 4, **characterised in that** there is arranged, below the plane in which there extends a part (8) of the cover (5) of the folding-top compartment which is at the rear in the direction of travel, an auxiliary frame (13) which acts as a support for the drive or drive-assisting member (118), which latter extends from the said support towards a lever which is connected to the part positioned at the front.

6. Convertible vehicle (1) according to one of claims 1 to 5, **characterised in that** the cover of the folding-top compartment is in two parts and the parts are connected together by a transmission linkage (22, 122).

7. Convertible vehicle (1) according to claim 5 or 6, **characterised in that** a common axis (24) is provided for the pivoting-up of the rear part (8) of the cover (5) of the folding-top compartment to open the loading opening for luggage and for the connecting-on of the auxiliary frame (13) and the pivoting-up of the front part (7) relative to the rear part (8).

## Revendications

1. Véhicule convertible (1) avec un toit (2) escamotable dans une partie arrière d'un véhicule automobile en dessous d'un couvercle de compartiment de capote (5), mobile d'une part pour libérer une ouverture de passage pour le toit et d'autre part pour libérer une ouverture de chargement pour un coffre, le couvercle de compartiment de capote (5) constitué de plusieurs parties (7 ; 8) comportant au moins une rainure de séparation s'étendant essentiellement transversalement par rapport à la direction de déplacement entre les parties (7 ; 8), alors que pour libérer l'ouverture de chargement pour bagages, une partie (7) du couvercle de compartiment de capote placée en avant dans la direction de déplacement reste en position de repos,
**caractérisé en ce que**
pour libérer l'ouverture de passage pour le toit, la pluralité de parties (7 ; 8) du couvercle de compartiment de capote pivotent sur un axe (24) placé à distance d'une partie de toit arrière (3), avec un organe opérationnel d'entraînement ou soutenant l'entraînement (18, 118) prévu pour faire pivoter les parties (7 ; 8) l'une contre l'autre,

2. Véhicule convertible (1) selon la revendication 1,
**caractérisé en ce que**
l'organe opérationnel d'entraînement ou soutenant l'entraînement (118) au sens d'un pivotement de la partie arrière (8), agit lors de la libération de l'ouverture de chargement pour bagages au sens d'un pivotement d'une partie arrière (8) par rapport à la partie avant (7).

3. Véhicule convertible (1) selon la revendication 1 ou 2,
**caractérisé en ce que**
pour libérer l'ouverture de passage pour le toit, la partie (7) est mobile par pivotement contre l'autre partie (8).

4. Véhicule convertible (1) selon l'une des revendications 1 à 3,
**caractérisé en ce qu'**
au moins un ressort de traction est prévu comme organe opérationnel d'entraînement ou soutenant l'entraînement (118).

5. Véhicule convertible (1) selon l'une des revendications 1 à 4,
**caractérisé en ce qu'**
en dessous du niveau du développement d'une partie arrière (8) du couvercle de compartiment de capote (5) dans la direction de déplacement, un cadre de support (13) est placé pour servir de contre-appui à l'organe opérationnel d'entraînement ou soutenant l'entraînement (118) qui s'étend depuis celui-ci en direction d'un levier relié à la partie avant.

6. Véhicule convertible (1) selon l'une des revendications 1 à 5,
**caractérisé en ce que**
le couvercle de compartiment de capote est formé de deux parties reliées entre elles par un engrenage à renvoi (22, 122).

7. Véhicule convertible (1) selon la revendication 5 ou 6,
**caractérisé en ce qu'**
un axe commun (24) est prévu, pour rabattre la partie arrière (8) du couvercle de compartiment de capote (5) afin de libérer l'ouverture de chargement pour bagages, ainsi que pour diriger le cadre de support (13) et faire pivoter la partie avant (7) par rapport à la partie arrière (8).
